# EUROPÄISCHE PATENTSCHRIFT

(11) **EP 1 570 196 B1**
(45) Veröffentlichungstag und Bekanntmachung des Hinweises auf die Patenterteilung: **13.09.2006**
(21) Anmeldenummer: 03775400.9
(22) Anmeldetag: 28.11.2003
(51) Int. Cl.: F16J 15/32

(54) **BÜRSTENDICHTUNG ZUM DICHTEN EINES SPALTES ZWISCHEN EINEM ROTOR UND EINEM STATOR**
BRUSH SEAL FOR SEALING A GAP BETWEEN A ROTOR AND A STATOR
JOINT BROSSE DESTINE A RENDRE ETANCHE UNE FENTE ENTRE UN ROTOR ET UN STATOR

(30) Priorität: 11.12.2002 DE 10258096
(43) Veröffentlichungstag der Anmeldung: 07.09.2005
(73) Patentinhaber: SIEMENS AKTIENGESELLSCHAFT, 80333 München (DE)
(72) Erfinder: URLICHS, Karl, 90552 Röthenbach (DE); RUPP, Helmut, 91154 Roth/Heubühl (DE)
(86) Internationale Anmeldenummer: PCT/EP2003/013437
(87) Internationale Veröffentlichungsnummer: WO 2004/053363

(56) Entgegenhaltungen:
- WO-A-99/06673
- DE-A- 3 907 614
- US-A- 5 066 024

## Beschreibung

### Stand der Technik:

Bürstendichtungen werden beispielsweise in Strömungsmaschinen mit Erfolg eingesetzt, um den Leckagestrom zwischen einem Rotor und einem Stator zu verringern. Nachteilig an vielen Bürstendichtungen ist es, dass die Bürstenringträger oft nicht einstückig hergestellt werden. Daraus ergeben sich im Betrieb Unrundheiten der Bürstendichtungen und der sekundären Dichtung zum Gehäuse, die sich nachteilig auf die Dichtwirkung der Gesamtanordnung und damit auf den Wirkungsgrad der Strömungsmaschine auswirken.

Aus der DE 199 38 268 A1 ist eine Bürstendichtung bekannt, bei welcher der Bürstenring zwischen zwei ringförmigen einstückigen Bürstenringträgern eingeschweißt wird. Diese gesamte Einheit, bestehend aus zwei Bürstenringträgern und einem dazwischen befindlichen Bürstenring wird in eine entsprechende Nut des Stators eingefügt. D. h. je Bürstenring sind zwei Bürstenringträger und eine Nut im Stator zur Aufnahme der Bürstentringträger erforderlich.

Aus der DE 197 C2 ist eine Bürstendichtung bei der ein Bürstenring zwischen zwei Bürstenringträgern gehalten wird und die Bürstenringträger durch Bördeln miteinander verbunden werden. Auch bei dieser Bürstendichtung sind je Bürstenring zwei Bürstenringträger und eine Nut im Stator erforderlich.

Der Erfindung liegt die Aufgabe zugrunde, eine Bürstendichtungsanordnung bereitzustellen, die hinsichtlich Dichtwirkung sowie Herstellungs- und Montageaufwand weiter verbessert ist.

Diese Aufgabe wird erfindungsgemäß bei einer erfindungsgemäßen Bürstendichtung zum Dichten eines Spaltes zwischen einem Rotor und einem Stator, insbesondere einer Strömungsmaschine, mit wenigstens einem eine Vielzahl von Dichtborsten aufweisenden Bürstenring, mit welchem zwei sich in Umfangsrichtung des Rotors erstreckenden ringförmigen Bürstenträgern, wobei jeder Bürstenring zwischen einer ersten. Stirnfläche eines ersten Bürstenringträgers und einer zwei Stirnfläche eines zweiten Bürstenringträgers fixiert, und wobei der zweite Bürstenringträger unmittelbar an dem ersten Bürstenringträger axial und radial fixiert ist, gemäß US-A-5 066 024 dadurch gelöst, dass der zweite Bürstenringträger an dem ersten Bürstenringträger durch eine Schnappverbindung fixiert ist.

### Vorteile der Erfindung:

Durch diese Maßnahme kann der Herstellungs- und Montageaufwand deutlich verringert werden, da durch bloßes Ineinanderstecken von zweitem Bürstenringträger und erstem Bürstenringträger eine axiale und radiale Fixierung des zweiten Bürstenringträgers erfolgt, welche komplizierte und kostenintensive Einstellarbeiten und Fixierungen verhindert. Außerdem ist der Bürstenringträger rotationssymmetrisch aufgebaut, so dass die Rundheit auch bei wechselnden Betriebbedingungen erhalten bleibt.

Selbstverständlich können auf diese Weise auch mehrere Bürstenringe hintereinander angeordnet werden, wobei pro zusätzlichem Bürstenring nur ein weiterer Bürstenringträger erforderlich ist. Auch dadurch ergibt sich eine erhebliche Kosteneinsparung ohne Nachteile hinsichtlich der Funktionalität und Dichtwirkung der erfindungsgemäßen Bürstendichtung. Schließlich ist auch der erforderliche Bauraum sehr klein.

Im Zusammenhang mit der Erfindung wird nachfolgend von einem ersten Bürstenringträger und einem zweiten Bürstenringträger gesprochen. Damit soll eine Unterscheidung zweier an sich gleicher Bauteile erfolgen. Der erste Bürsteinringträger ist in Strömungsrichtung des durch den Dichtspalt strömenden Fluids stromabwärts des zweiten Bürstenringträgers angeordnet.

Bei einer vorteilhaften Variante der Erfindung ist vorgesehen, dass zwischen einem in Strömungsrichtung des zu dichtenden Fluids ersten Bürstenringträger und einem in Strömungsrichtung des zu dichtenden Fluids zweiten Bürstenringträger eine Nut ausgebildet ist, und dass die Nut zur Aufnahme des Bürstenrings dient. Durch diese Nut wird der Bürstenring ebenfalls ohne zusätzlichen Aufwand für die Zentrierung und Fixierung desselben in den Bürstenringträgern axial und radial fixiert, wenn der zweite Bürstenringträger auf den ersten Bürstenringträger aufgeschoben wird. Erfindungsgemäß kann die Nut zur Aufnahme des Bürstenrings entweder vollständig im ersten Bürstenringträger oder im zweiten Bürstenringträger oder teilweise in beiden vorhanden sein kann.

Der Bürstenring ist das eigentliche Dichtelement, welches aus einer Vielzahl von Dichtborsten besteht. Die Dichtborsten sind im Falle einer Radialdichtung so angeordnet, dass die Dichtborsten in eingebautem Zustand den Rotor gerade berühren.

Bei einer weiteren vorteilhaften Ausgestaltung der Erfindung ist vorgesehen, dass mindestens ein erster Bürstenringträger auf seiner ersten Stirnseite einen Absatz mit einer Umfangsnut aufweist, dass mindestens ein zweiter Bürstenringträger auf seiner zweiten Stirnseite einen umlaufenden Vorsprung aufweist, und dass der Vorsprung des zweiten Bürstenringträgers mit dem Absatz und der Umfangsnut eines benachbart angeordneten ersten Bürstenringträgers so zusammenwirkt, dass eine axiale und radiale Fixierung des zweiten Bürstenringträgers relativ zum ersten Bürstenringträger erfolgt. Diese Verbindung zwischen erstem Bürstenringträger und zweitem Bürstenringträger ist auch als Schnappverbindung, insbesondere als unlösbare Schnappverbindung, ausgeführt sein. In jedem Fall bietet diese Verbindung jedoch eine gute axiale und radiale Fixierung des zweiten Bürstenringträgers bei gleichzeitig geringen Herstellungskosten, da sowohl der Absatz und die Umfangsnut als auch der Vorsprung in einer Aufspannung einfach auf einer Drehmaschine herstellbar sind.

In einer weiteren erfindungsgemäßen Ausgestaltung ist vorgesehen, dass mindestens ein Bürstenringträger auf seiner ersten Stirnseite einen Absatz mit einer Umfangsnut aufweist, dass zumindest ein Bürstenringträger auf seiner zweiten Stirnseite einen umlaufenden Vorsprung aufweist, und dass der Vorsprung der ersten Stirnseite des mindestens einen Bürstenringträgers mit dem Absatz und der Umfangsnut eines benachbart angeordneten weiteren Bürstenringträgers zusammenwirkt. Dadurch ist es möglich, beliebig viele Bürstenringträger und Bürstenringe hintereinander anzuordnen, wobei mit Ausnahme eines Anfangs- und eines Endstücks lauter identische Bauteile zum Einsatz kommen können. Dadurch werden die Herstellkosten weiter verringert. Die Zahl der in Reihe angeordneten Bürstenringe wird in der Regel in Abhängigkeit des vorhandenen Bauraums und der gewünschten Dichtwirkung festgelegt werden. In praktisch ausgeführten Beispielen hat es sich als möglich erwiesen, dass ein Bürstenringträger eine Dicke von etwa 12 mm hat, so dass alle 12 mm ein Bürstenring angeordnet werden kann. Daraus ergibt sich auch, dass die erfindungsgemäße Bürstendichtung sehr platzsparend ist und somit bei gleichem Bauraum mehr Bürstenringe als bislang üblich vorgesehen werden können.

Um die Bürstendichtung sicher relativ zum Stator zu fixieren, ist vorgesehen, dass ein Bürstenringträger mindestens mittelbar am Stator gehalten ist. Dies kann durch eine Nut im Stator, Schrauben oder andere aus dem Stand der Technik bekannte Mittel erfolgen.

Es hat sich als vorteilhaft erwiesen, wenn die Umfangsnut in dem zuerst montierten Teil angeordnet wird und sich die Rastnase im neu aufgeschobenen Teil befindet. Wenn nämlich die Rastverbindung unlösbar (irreversibel) ist, wie dies erfindungsgemäß vorgesehen sein kann, hat dies den Vorteil, dass im Falle eines Fertigungsfehlers nur der zuletzt montierte Bürstenringträger durch Abdrehen des Vorsprungs zerstörend demontiert werden muß.

Um die Dichtwirkung der erfindungsgemäßen Bürstendichtung zu verbessern, ist vorgesehen, dass der oder die Bürstenringträger eine Stützplatte und/oder einen Schutzring aufweisen, die sich vom Bürstenringträger in Richtung des Rotors erstrecken und an denen die Bürstendichtung an wenigstens einer Axialseite axial gestützt anliegt. Solche Stützplatten und Schutzringe sind an sich aus dem Stand der Technik bekannt; jedoch kann bei der erfindungsgemäßen Bürstendichtung eine Stützplatte und ein Schutzring direkt aus dem Bürstenringträger herausgedreht werden, so dass auch durch den Einsatz der Stützmittel der Bürstenringträger einstückig bleibt und die Zahl der benötigten Bauteile und damit auch der Herstellungsaufwand weiter minimal bleibt.

In weiterer vorteilhafter Ausgestaltung der Erfindung sind die Stützplatte und der Schutzring radial elastisch ausgebildet, so dass im Falle eines Anlaufens des Rotors an den Stützmitteln diese in radialer Richtung ohne einen Schaden zu verursachen oder selbst beschädigt zu werden ausweichen können. Sobald der Rotor wieder in seine ursprüngliche zentrische Lage zurückgekehrt ist nehmen die axialen Stützmittel wieder ihre ursprüngliche Form und Lage ein.

Die Wirkung der erfindungsgemäßen Bürstendichtung kann weiter verbessert werden, wenn der abzudichtende Rotor mindestens einen umlaufenden Wulst aufweist, und der mindestens eine Wulst versetzt zu dem oder den Bürstenringen angeordnet ist. Dieser Wulst, der beispielsweise eine Höhe von 0,7 mm haben kann, lenkt den durch den Dichtspalt austretenden Fluidstrom so ab, dass die stromab des Wulstes liegenden Bürstenringe von dem stromauf kommenden Fluidstrahl nicht beschädigt werden können. Selbstverständlich ist bei der Bemessung der Höhe des Wulstes darauf zu achten, dass die Bürstendichtung und die axialen Stützmittel über den Wulst geschoben werden können, bei der Montage der erfindungsgemäßen Bürstendichtung nicht beschädigt werden.

Weitere Vorteile und vorteilhafte Ausgestaltungen sind der nachfolgenden Zeichnung, deren Beschreibung und den Patentansprüchen entnehmbar.

### Zeichnung:

Es zeigen:
- Figur 1: ein erstes Ausführungsbeispiel einer erfindungsgemäßen Bürstendichtung im Schnitt
- Figur 2: ein zweites Ausführungsbeispiel einer erfindungsgemäßen Bürstendichtungen an einem Ausgleichskolben einer Dampfturbine und
- Figur 3: ein drittes Ausführungsbeispiel einer erfindungsgemäßen Bürstendichtungen zur axialen Abdichtung.

### Beschreibung der Ausführungsbeispiele

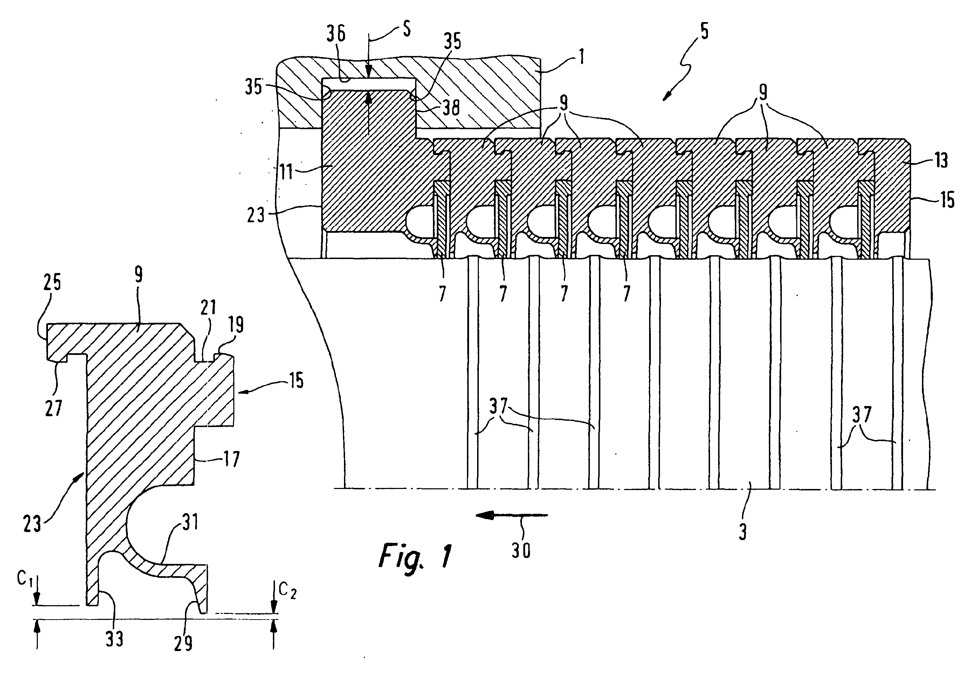

Figur 1 zeigt ein erstes Ausführungsbeispiel einer erfindungsgemäßen Dichtung, welche zwischen einem Stator 1 und einem Rotor 3 einer Strömungsmaschine angeordnet ist. Die in dem ersten Ausführungsbeispiel mehrstufig ausgeführte Bürstendichtung ist in Figur 1 in ihrer Gesamtheit mit 5 bezeichnet. Die Bürstendichtung 5 besteht im wesentlichen aus Bürstenringen 7, welche in Bürstenringträgern 9, 11 und 13 axial und radial fixiert werden. Erfindungsgemäße Bürstendichtungen können auch einstufig, d. h. mit nur einem Bürstenring ausgeführt werden.

In Figur 1 ist ein einzelner Bürstenringträger 9 vergrößert dargestellt worden. Anhand dieses einzelnen Bürstenringträgers 9 werden nachfolgend dessen Form und Funktion erläutert. Die anderen Bürstenringträger 9 sind identisch aufgebaut. Die anderen Bürstenringträger 11 und 13 sind teilweise identisch aufgebaut.

Um die Übersichtlichkeit der Figur 1 nicht zu beeinträchtigen sind nicht alle Bürstenringträgern 9, 11 und 13 mit Bezugszeichen versehen worden.

Der Bürstenringträger 9 hat eine erste Stirnseite 15. An dieser ersten Stirnseite 15 ist eine Nut 17 ausgespart in die ein Bürstenring 7 eingelegt werden kann. An dem Außendurchmesser des Bürstenringträgers 9 ist in der ersten Stirnseite 15 ein Absatz 19 mit einer Umfangsnut 21 ausgebildet.

An einer zweiten Stirnseite 23 ist ein umlaufender Vorsprung 25 vorhanden, welcher so dimensioniert ist, dass er auf einen Absatz 19 eines benachbart angeordneten Bürstenringträgers 9 aufschiebbar ist. Dadurch ergibt sich eine axiale und radiale Fixierung von zwei benachbart angeordneten Bürstenringträgern 9 zueinander. An dem Vorsprung 25 ist eine Rastnase 27 vorgesehen, welche in die Umfangsnut 21 an einer ersten Stirnseite 17 eines benachbart angeordneten Bürstenringträgers 9 einrasten kann. Die Umfansgnut 21 und die Rastnase 27 bilden bei dem in Fig. 1 dargestellten Ausführungsbeispiel eine Schnappverbindung.

Wie aus der Gesamtansicht der erfindungsgemäßen Bürstendichtung 5 in Figur 1 hervorgeht, werden mehrere Bürstenringträger 9 miteinander verbunden, in dem der Vorsprung 25 auf der zweiten Stirnseite 23 eines Bürstenringträgers 9 auf einen Absatz 19 einer ersten der ersten Stirnseite 15 eines benachbart angeordneten Bürstenringträgers 9 aufgeschoben wird. Durch die Umfangsnut 21 und die Rastnase 27 kann eine lösbare oder unlösbare Schnappverbindung hergestellt werden. Die Nut 17 auf der ersten Stirnseite 15 ist hinsichtlich Durchmesser und Tiefe so ausgebildet, dass ein Bürstenring 7 zwischen zwei Bürstenringträger 9 eingeklemmt und axial sowie radial fixiert wird, wenn diese Bürstenringträger 9 miteinander verrastet sind.

Die Anordnung dieser Verrastung erfolgt zweckmäßigerweise in der Art, dass, wie dargestellt, sich die Umfangsnut 21 in dem zuerst montierten Teil befindet und sich die Rastnase 27 im neu aufgeschobenen Teil befindet. Wenn, wie dies erfindungsgemäß vorgesehen sein kann, die Rastverbindung unlösbar (irreversibel) ist, hat dies den Vorteil, dass im Falle eines Fertigungsfehlers nur der zuletzt montierte Ring 9 durch Abdrehen des Vorsprungs 25 zerstörend demontiert werden muß.

Um die Bürstenringe 7 axial abzustützen, ist an der ersten Stirnseite 15 des Bürstenringträgers 9 eine Stützplatte 29 vorgesehen. Die erste Stirnseite 15 ist in Strömungsrichtung des durch den Dichtspalt strömenden Fluids gesehen vorne an dem Bürstentringträger 9 angeordnet. In Fig. 1 ist die Strömungsrichtung durch einen Pfeil 30 dargestellt.
Die Stützplatten 29 sind nach einem Bürstenring 7 angeordnet und sind radial elastisch ausgebildet, da im Bürstringträger 9 eine Hohlkehle 31 ausgespart ist. Bei einem Anstreifen des Rotors 3 würde der Spalt C₂ zwischen Rotor 3 und Stützplatte 29 verschwinden und die Stützplatte 29 radial zurückfedern.

An der zweiten Stirnseite 23 ist ein Schutzring 33 vorgesehen, der in axialer Richtung weniger elastisch als die Stützplatte 29 ist, da sie üblicherweise mit einem größeren Spalt C₁ zum Rotor 3 versehen werden. Die zweite Stirnseite 23 ist in Strömungsrichtung 30 des durch den Dichtspalt strömenden Fluids gesehen vor einem Bürstenring 7 angeordnet. Je nach Bedarf und Anforderungen kann die radiale Elastizität der Stützplatte 29 oder des Schutzrings 33 zwischen den beiden in der Vergrößerung in Figur 1 dargestellten Ausführungen auf der ersten Stirnfläche 15 und auf der zweiten Stirnfläche 23 variiert werden.

Der Spalt c₁ zwischen Schutzring 33 und Rotor 3 ist in der Regel etwas größer als ein Spalt c₂ zwischen Stützplatte 29 und Rotor 3, wodurch ein Anstreifen des Schutzrings 33 verhindert wird. Bevor es nämlich zum Anstreifen des Schutzrings 33 kommt, weicht die Bürstendichtung 5 dem Rotor 3 in axialer Richtung (siehe Doppelpfeil S) aus.

Der Bürstenringträger 13, welcher in Figur 1 ganz rechts als Abschlussstück angeordnet ist, unterscheidet sich von den Bürstenringträgern 9 dadurch, dass lediglich eine zweite Stirnseite 23 erfindungsgemäß mit einem Vorsprung 25 und einer Rastnase 27 ausgebildet ist. Die erste Stirnseite 15 ist bei diesem Bürstenringträger 13 als Planfläche ausgebildet.

Der Bürstenringträger 11 unterscheidet sich von den ausführlich beschriebenen Bürstenringträger 9 dadurch, dass lediglich eine erste Stirnseite 15 mit Nut 17, Absatz 19 und Umfangsnut 21 und Stützplatte 29 ausgebildet ist. Die zweite Stirnseite 23 ist als Planfläche ausgebildet. An der ersten Stirnseite 15 kann ein Bürstenringträger 9 in der zuvor beschriebenen Weise befestigt werden.

Parallel zu dieser zweiten Stirnseite 23 ist eine weitere Planfläche 38 an dem Bürstenringträger 11 ausgebildet, welche parallel zur zweiten Stirnseite 23 verläuft. In dem Stator 1 ist eine zweite Nut 36 eingestochen, in welche der Bürstenringträger 11 eingebracht wird. Dadurch ist die erfindungsgemäße Bürstendichtung 5 mit dem Stator 1 verbunden und zwar so, dass eine gewisse radiale Verschiebung und Justierung, welche in Figur 1 durch den Doppelpfeil S angedeutet ist, möglich ist. Diese radiale Verschiebung kann bei der Montage genutzt werden, um die Bürstendichtung 5 relativ zu dem Rotor 3 auszurichten.

Die Dichtung zwischen Bürstenringträger 11 und dem Stator 1 erfolgt über die zweite Stirnseite 23 und die entsprechende Planfläche 35 der zweiten Nut 36, da die Bürstendichtung 5 durch den Druckunterschied vor und hinter der Bürstendichtung 5 gegen die genannte Planfläche des Stators 1 gepresst wird. Wenn diese Anpresskraft nicht ausreichen sollte, können zusätzliche Vorspannelemente (nicht dargestellt) vorgesehen werden, die den Bürstenringträger 11 mit seiner zweiten Stirnseite 23 gegen den Stator 1 pressen.

Die Bürstenringträger 11, 9 und 13 können durch Schrauben (nicht dargestellt) zusätzlich miteinander verbunden und gesichert werden.

An dem Rotor 3 sind zwischen den Bürstenringen 7 umlaufende Wülste 37 vorgesehen, welche das durch den Dichtspalt entweichende Fluid so ablenken, dass der stromabwärts eines Wulstes 37 befindliche Bürstenring 7 durch das ausströmende Fluid nicht beschädigt wird und die Dichtwirkung der erfindungsgemäßen Bürstendichtung 5 verbessert wird.

In der Praxis hat sich eine Höhe von 0,7 mm für Wülste 37 als sinnvoll ergeben. Es ist in jedem Fall darauf zu achten, dass die Wülste nicht so hoch sind, dass eine Montage der Bürstenringe 7 sowie der Bürstenringträger 11 und 13 unmöglich wird.

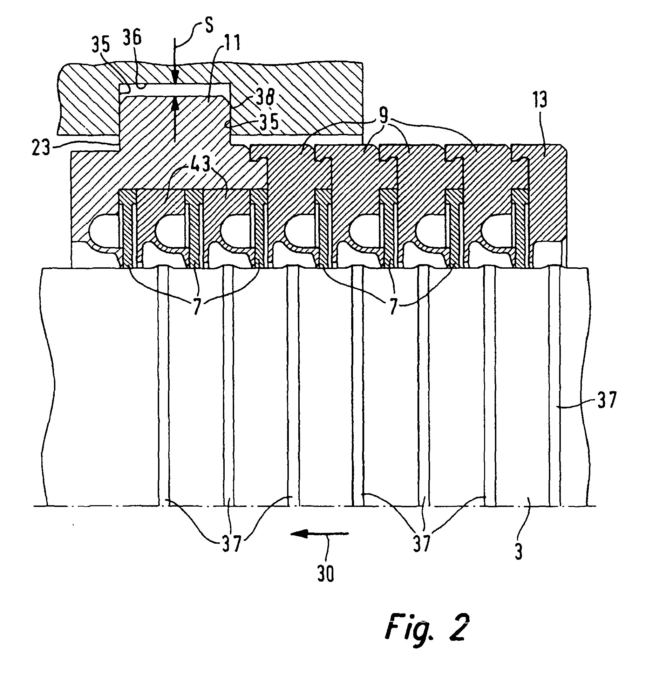

In Figur 2 ist ein zweites Ausführungsbeispiel einer erfindungsgemäßen Bürstendichtung 5 dargestellt. Bei dem Anwendungsfall gemäß Figur 2 dichtet die erfindungsgemäße Bürstendichtung 5 einen Rotor 3, insbesondere eines Turbinenrotors, ab. Der grundsätzliche Aufbau ist bei diesem Ausführungsbeispiel gleich wie bei dem Ausführungsbeispiel gemäß Figur 1. Deshalb wird auf eine ausführliche Beschreibung verzichtet. Auch werden aus Gründen der Übersichtlichkeit nicht alle Bezugszeichen eingetragen.

Ein wesentlicher Unterschied des zweiten Ausführungsbeispiels zu dem Ausführungsbeispiel gemäß Figur 1 besteht darin, dass in dem Bürstenringträger 11 Bürstenringe 7 mittels Bürstenringträgern 43 befestigt sind. Die Bürstenringträger 43 sind ähnlich wie die zuvor beschriebenen Bürstenringträger 9 aufgebaut. Bei dem in Figur 2 dargestellten Ausführungsbeispiel schließt sich nach dem dritten Bürstenring 7 einer der zuvor anhand der Figur 1 ausführlich beschriebener Bürstenringträger 9 an den Bürstenringträger 11 an. Die Erfindung ist jedoch nicht auf zwei Bürstenringträger 43 beschränkt. Die Zahl der Bürstenringe 7 hängt vielmehr von dem gewünschten Einsatz der erfindungsgemäßen Bürstendichtungsanordnung ab. Durch diese Bauweise kann der Platzbedarf für die erfindungsgemäße Bürstendichtung 5 verringert und der Herstellungsaufwand verringert werden.

Der Bürstenringträger 11 und/oder die Bürstenringe 9 und 13 können miteinander zusätzlich durch nicht dargestellte Schrauben miteinander verbunden sein.

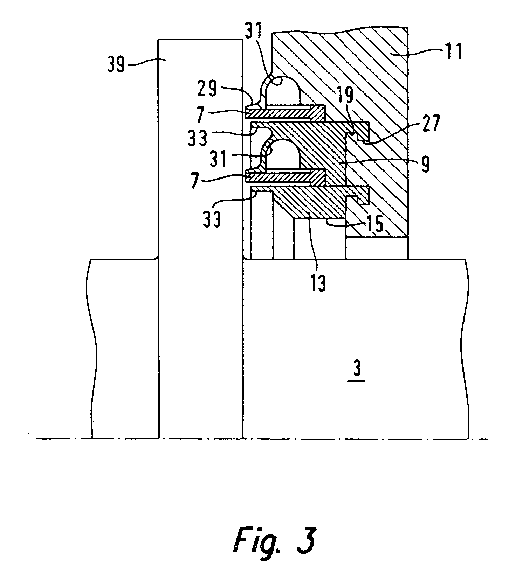

In Figur 3 ist ein drittes Ausführungsbeispiel einer erfindungsgemäßen Bürstendichtung 5 am Beispiel eines Ausgleichskolbens 39 eines Rotors 3 dargestellt. Dabei ist die Bürstendichtung 5 als Axialdichtung ausgebildet. Die Dichtborsten der Bürstenringe 7 sind bei diesem Ausführungsbeispiel zylindrisch angeordnet. Die Durchmesser der Bürstenringträger 11, 9 und 13 sind so aufeinander abgestimmt, dass sie in axialer Richtung miteinander durch die zuvor beschriebene Schnappverbindung verbunden werden können.

## Patentansprüche

1. Bürstendichtung zum Dichten eines Spaltes zwischen einem Rotor (3) und einem Stator (1), mit wenigstens einem eine Vielzahl von Dichtborsten aufweisenden Bürstenring (7), mit wenigstens zwei sich in Umfangsrichtung des Rotors (3) erstreckenden ringförmigen Bürstenringträgern (11, 9, 13), wobei jeder Bürstenring (9, 13) zwischen einer ersten Stirnfläche (15) eines ersten Bürstenringträgers (9) und einer zweiten Stirnfläche (23) eines zweiten Bürstenringträgers (13) fixiert ist, und wobei der zweite Bürstenringträger (13) unmittelbar an dem ersten Bürstenringträger (9) axial und radial fixiert ist, **dadurch gekennzeichnet, dass** der zweite Bürstenringträger (9, 13) an dem ersten Bürstenringträger (11, 9) durch eine Schnappverbindung, insbesondere eine unlösbare Schnappverbindung fixiert ist.

2. Bürstendichtung nach Anspruch 1, **dadurch gekennzeichnet, dass** zwischen zuerst montiertem Bürstenringträger (11, 9, 13) und zweitem Bürstenringträger (11, 9, 13) eine Nut (17) ausgebildet ist, und dass die Nut (17) zur Aufnahme des Bürstenrings (7) dient.

3. Bürstendichtung nach einem der vorhergehenden Ansprüche, **dadurch gekennzeichnet, dass** mindestens ein Bürstenringträger (11) auf seiner ersten Stirnseite (15) einen Absatz (19) mit einer Umfangsnut (21) aufweist, dass mindestens ein zweiter Bürstenringträger (9, 13) auf seiner zweiten Stirnseite (23) einen umlaufenden Vorsprung (25) mit einer Rastnase (27) aufweist, und dass der Vorsprung (25) und die Rastnase (27) des zweiten Bürstenringträgers (9, 13) mit dem Absatz (19) und der Umfangsnut (21) eines benachbart angeordneten ersten Bürstenringträgers (11) zusammenwirkt.

4. Bürstendichtung nach einem der vorhergehenden Ansprüche, **dadurch gekennzeichnet, dass** mindestens ein Bürstenringträger (9) auf seiner ersten Stirnseite (15) einen Absatz (19) mit einer Umfangsnut (21) aufweist, dass der mindestens eine Bürstenringträger (9) auf seiner zweiten Stirnseite (23) einen umlaufenden Vorsprung (25) mit einer Rastnase (27) aufweist, und dass der Vorsprung (25) und die Rastnase (27) der zweiten Stirnseite (23) des mindestens einen Bürstenringträgers (9) mit dem Absatz (19) und der Umfangsnut (21) eines benachbart angeordneten weiteren Bürstenringträgers (9, 11) zusammenwirkt.

5. Bürstendichtung nach einem der vorhergehenden Ansprüche, **dadurch gekennzeichnet, dass** ein Bürstenringträger (11) mindestens mittelbar am Stator (1) gehalten ist.

6. Bürstendichtung nach einem der vorhergehenden Ansprüche, **dadurch gekennzeichnet, dass** sich die Umfangsnut (21) in dem zuerst am Stator (1) montierten Bürstenringträger (11, 9) befindet und sich die Rastnase (27) im neu aufgeschobenen Bürstenringträger (9, 13) befindet.

7. Bürstendichtung nach einem der vorhergehenden Ansprüche, **dadurch gekennzeichnet, dass** der oder die Bürstenringträger (11, 9, 13) eine Stützplatte (29) aufweist, die sich in Richtung des Rotors (3) erstreckt, und dass die Bürstenringe (7) axial an der Stützplatte (29) anliegen.

8. Bürstendichtung nach einem der vorhergehenden Ansprüche, **dadurch gekennzeichnet, dass** der oder die Bürstenringträger (11, 9, 13) einen Schutzring (33) aufweist.

9. Bürstendichtung nach Anspruch 7 oder 8, **dadurch gekennzeichnet, dass** die Stützplatte (29) und/oder der Schutzring (33) radial elastisch ausgebildet sind.

10. Bürstendichtung nach einem der vorhergehenden Ansprüche, **dadurch gekennzeichnet, dass** die Bürstendichtung als Radialdichtung oder Axialdichtung ausgebildet ist.

11. Bürstendichtung nach einem der vorhergehenden Ansprüche, **dadurch gekennzeichnet, dass** der abzudichtende Rotor (3) mindestens einen umlaufenden Wulst (37) aufweist, und dass der mindestens eine Wulst (37) versetzt zu dem oder den Bürstenringen (7) angeordnet ist.

## Claims

1. Brush seal for sealing a gap between a rotor (3) and a stator (1), with at least one brush ring (7) having a multiplicity of sealing bristles, and with at least two annular brush ring carriers (11, 9, 13) extending in the circumferential direction of the rotor (3), each brush ring (9, 13) being fixed between a first end face (15) of a first brush ring carrier (9) and a second end face (23) of a second brush ring carrier (13), and the second brush ring carrier (13) being directly fixed axially and radially to the first brush ring carrier (9), **characterized in that** the second brush ring carrier (9, 13) is fixed to the first brush ring carrier (11, 9) by means of a snap connection, in particular an unreleasable snap connection.

2. Brush seal according to Claim 1, **characterized in that** a slot (17) is formed between the brush ring carrier (11, 9, 13) mounted first and the second brush ring carrier (11, 9, 13), and **in that** the slot (17) serves for receiving the brush ring (7).

3. Brush seal according to one of the preceding claims, **characterized in that** at least one brush ring carrier (11) has on its first end face (15) a shoulder (19) with a circumferential slot (21), **in that** at least one second brush ring carrier (9, 13) has on its second end face (23) a continuous projection (25), with a latching nose (27), and **in that** the projection (25) and the latching nose (27) of the second brush ring carrier (9, 13) cooperates with the shoulder (19) and with the circumferential slot (21) of an adjacently arranged first brush ring carrier (11).

4. Brush seal according to one of the preceding claims, **characterized in that** at least one brush ring carrier (9) has on its first end face (15) a shoulder (19) with a circumferential slot (21), **in that** the at least one brush ring carrier (9) has on its second end face (23) a continuous projection (25), with a latching nose (27), and **in that** the projection (25) and the latching nose (27) of the second end face (23) of the at least one brush ring carrier (9) cooperates with the shoulder (19) and with the circumferential slot (21) of an adjacently arranged further brush ring carrier (9, 11).

5. Brush seal according to one of the preceding claims, **characterized in that** one brush ring carrier (11) is held at least indirectly on the stator (1).

6. Brush seal according to one of the preceding claims, **characterized in that** the circumferential slot (21) is located in the brush ring carrier (11, 9) mounted first on the stator (1), and the latching nose (27) is located in the newly pushed-on brush ring carrier (9, 13).

7. Brush seal according to one of the preceding claims, **characterized in that** the brush ring carrier or brush ring carriers (11, 9, 13) have a support plate (29) which extends in the direction of the rotor (3), and **in that** the brush rings (7) bear axially against the support plate (29).

8. Brush seal according to one of the preceding claims, **characterized in that** the brush ring carrier or brush ring carriers (11, 9, 13) have a protective ring (33).

9. Brush seal according to Claim 7 or 8, **characterized in that** the support plate (29) and/or the protective ring (33) are designed to be radially elastic.

10. Brush seal according to one of the preceding claims, **characterized in that** the brush seal is designed as a radial seal or axial seal.

11. Brush seal according to one of the preceding claims, **characterized in that** the rotor (3) to be sealed off has at least one continuous bead (37), and **in that** the at least one bead (37) is arranged so as to be offset with respect to the brush ring or brush rings (7).

## Revendications

1. Joint balai pour assurer l'étanchéité d'un intervalle entre un rotor (3) et un stator (1), comprenant au moins une bague à balai (7) ayant une pluralité de soies d'étanchéité, au moins deux supports de bague à balai (11, 9, 13) annulaires, s'étendant dans la direction périphérique du rotor (3), chaque bague à balai (9, 13) étant immobilisée entre une première surface frontale (15) d'un premier support de bague à balai (9) et une deuxième surface frontale (23) d'un deuxième support de bague à balai (13) et le deuxième support de bague à balai (13) étant immobilisé en direction axiale et radiale directement sur le premier support de bague à balai (9), **caractérisé en ce que** le deuxième support de bague à balai (9, 13) est immobilisé sur le premier support de bague à balai (11, 9) par un assemblage par enclenchement, notamment un assemblage par enclenchement inamovible.

2. Joint balai suivant la revendication 1, **caractérisé en ce qu'**une rainure (17) est ménagée entre un support de bague à balai monté en premier lieu (11, 9, 13) et un deuxième support de bague à balai (11, 9, 13) et **en ce que** la rainure (17) est destinée à recevoir la bague à balai (7).

3. Joint balai suivant l'une quelconque des revendications précédentes, **caractérisé en ce qu'**au moins un support de bague à balai (11) comporte sur sa première face frontale (15) un talon (19) ayant une rainure périphérique (21), **en ce qu'**au moins un deuxième support de bague à balai (9, 13) comporte sur sa deuxième face frontale (23) une saillie périphérique (25) ayant un tenon d'enclenchement (27) et **en ce que** la saillie (25) et le tenon d'enclenchement (27) du deuxième support de bague à balai (9, 13) coopèrent avec le talon (19) et la rainure périphérique (21) d'un premier support de bague à balai (11) disposé dans le voisinage.

4. Joint balai suivant l'une quelconque des revendications précédentes, **caractérisé en ce qu'**au moins un support de bague à balai (9) comporte sur sa première face frontale (15) un talon (19) ayant une rainure périphérique (21), **en ce que** le au moins un support de bague à balai (9) comporte sur sa deuxième face frontale (23) une saillie périphérique (25) ayant un tenon d'enclenchement (27) et **en ce que** la saillie (25) et le tenon d'enclenchement (27) de la deuxième face frontale (23) du au moins un support de bague à balai (9) coopèrent avec le talon (19) et la rainure périphérique (21) d'un support de bague à balai supplémentaire (9, 11), disposé dans le voisinage.

5. Joint balai suivant l'une quelconque des revendications précédentes, **caractérisé en ce qu'**un support de bague à balai (11) est maintenu au moins indirectement sur le stator (1).

6. Joint balai suivant l'une quelconque des revendications précédentes, **caractérisé en ce que** la rainure périphérique (21) se trouve dans le support de bague à balai (11, 9) monté en premier lieu sur le stator (1) et **en ce que** le tenon d'enclenchement (27) se trouve sur le support de bague à balai (9, 13)nouvellement emmanché.

7. Joint balai suivant l'une quelconque des revendications précédentes, **caractérisé en ce que** le ou les support(s) de bague à balai (11, 9, 13) comporte(nt) une plaque d'appui (29) qui s'étend dans la direction du rotor (3) et **en ce que** les bagues à balai (7) s'appuient en direction axiale sur la plaque d'appui (29).

8. Joint balai suivant l'une quelconque des revendications précédentes, **caractérisé en ce que** le ou les support(s) de bague à balai (11, 9, 13) comporte(nt) une bague protectrice (33).

9. Joint balai suivant la revendication 7 ou 8, **caractérisé en ce que** la plaque d'appui (29) et/ou la bague protectrice (33) est conçue de façon élastique en direction radiale.

10. Joint balai suivant la revendication 7 ou 8, **caractérisé en ce que** le joint balai est conçu en tant que joint radial ou en tant que joint axial.

11. Joint balai suivant la revendication 7 ou 8, **caractérisé en ce que** le rotor dont il faut assurer l'étanchéité (3) comporte au moins un bourrelet périphérique (37) et **en ce que** le au moins un bourrelet (37) est déporté par rapport au ou aux bagues à balai (7).
